# EUROPEAN PATENT APPLICATION

(11) **EP 4 674 610 A1**
(43) Date of publication of application: **07.01.2026**
(21) Application number: 24185739.0
(22) Date of filing: 01.07.2024
(51) Int. Cl.: B32B 3/26, A43B 1/05, A43B 23/02, B32B 3/28, B32B 5/02, B32B 7/05, B32B 27/12, B32B 27/40, B32B 5/04

(54) **TEXTILE FABRIC**

(71) Applicant: Jhih Huei Trading Co., Ltd., 506 Fuxing Township Changhua (TW)
(72) Inventor: WU, YUNG-YU, 50345 Huatan Township, Changhua County (TW)
(74) Representative: Lang, Christian

(57) **Abstract**

A textile fabric (1) is provided, including: a main body (10) and a first film layer (20). The main body (10) includes two surfaces (11) opposite to each other and at least one hollow hole (12) penetrating through the two surfaces (11). The first film layer (20) is disposed on one of the two surfaces (11) and covers the at least one hollow hole (12). Therefore, a shape of the at least one hollow hole (12) is changeable to meet different design requirements, and the first film layer (20) can fix the at least one hollow hole (12) and prevent edges of the main body (10) at the at least one hollow hole (12) from becoming unraveled so that the textile fabric (1) has a three-dimensional surface texture and is tough and easy to be processed.

## Description

### BACKGROUND OF THE INVENTION

### Field of the Invention

The present invention relates to a textile fabric.

### Description of the Prior Art

Textile fabrics are made of a plurality of yarns by different techniques such as knitting and weaving, and they are widely used in daily life including clothing, shoes, bags, etc. Generally, patterns of the textile fabrics are designed by changing colors, types or weaving methods of the plurality of yarns, and the plurality of yarns have to be changed during the manufacturing process, which is time-consuming and complicated. Moreover, the manufacturing process as described above can only provide flat patterns and is inconvenient to change the pattern, causing high cost and poor efficiency. In addition, the conventional textile fabrics are easy to become unraveled when being cut and the cutting edges need to be sewn, which is inconvenient to be processed.

The present invention is, therefore, arisen to obviate or at least mitigate the above-mentioned disadvantages.

### SUMMARY OF THE INVENTION

The main object of the present invention is to provide a textile fabric, which has preferable appearance, good toughness and is easy to be processed.

To achieve the above and other objects, the present invention provides a textile fabric, including: a main body and a first film layer. The main body includes two surfaces opposite to each other and at least one hollow hole penetrating through the two surfaces. The first film layer is disposed on one of the two surfaces and covers the at least one hollow hole.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram of a preferable embodiment of the present invention;
Fig. 2 is a breakdown drawing of a preferable embodiment of the present invention;
Fig. 3 is a cross-sectional view of a preferable embodiment of the present invention; and
Fig. 4 is a drawing showing application according to a preferable embodiment of the present invention.

### DETAILED DESCRIPTION OF THE PREFERRED EMBODIMENTS

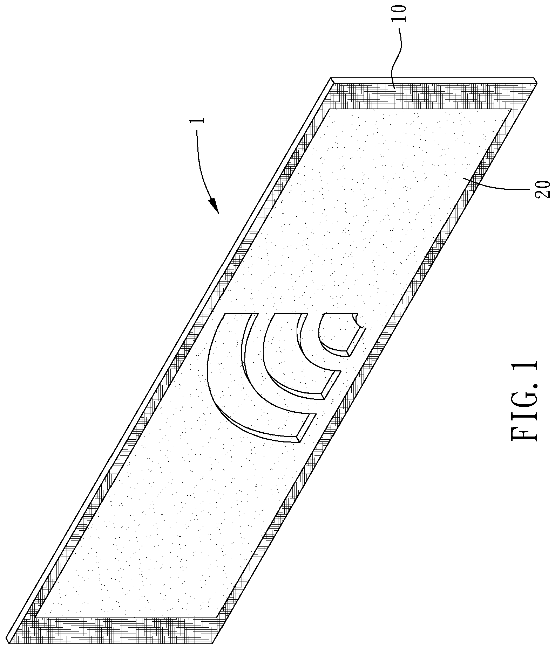

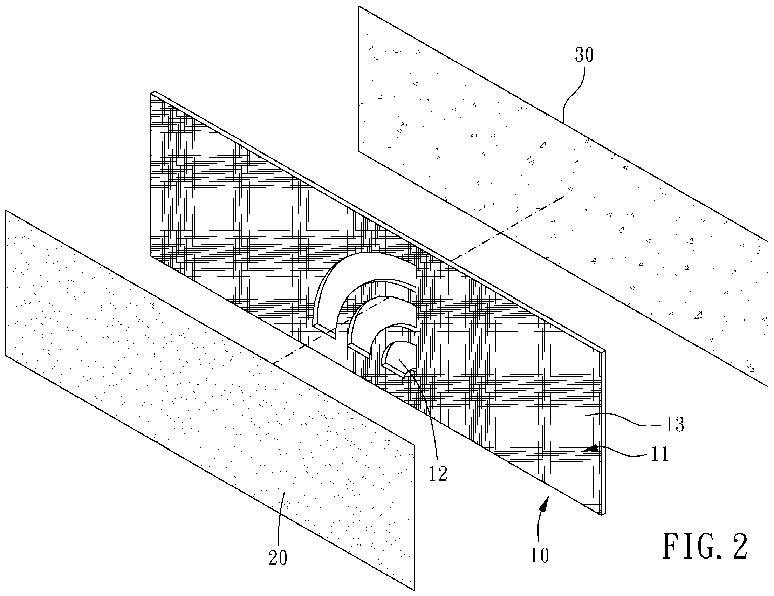

Please refer to Figs. 1 to 4 for a preferable embodiment of the present invention. A textile fabric 1 of the present invention includes a main body 10 and a first film layer 20.

The main body 10 includes two surfaces 11 opposite to each other and at least one hollow hole 12 penetrating through the two surfaces 11. The first film layer 20 is disposed on one of the two surfaces 11 and covers the at least one hollow hole 12 so that the first film layer 20 can fix the at least one hollow hole 12 to avoid deformation and increase a structural strength of the main body 10.

The first film layer 20 is recessed within the at least one hollow hole 12 and at least partially connected with an inner surface defining the at least one hollow hole 12. Specifically, the at least one hollow hole 12 is formed by cutting, such as die cutting, laser cutting or hand cutting; wherein laser cutting is preferred so as to provide precise and sharp cutting edges and ensure processing accuracy. A plurality of yarns 13 of the main body 10 are broken at the at least one hollow hole 12, and cross sections of the plurality of yarns 13 at the at least one hollow hole 12 are connected with and fixed by the first film layer 20, which prevents the cross sections of the plurality of yarns 13 from being stretched and becoming unraveled.

Moreover, the main body 10 may be a woven fabric or a knitted fabric, and each of the two surfaces 11 of the main body 10 has a surface texture being concave and convex which is formed by interlacing the plurality of yarns 13. The first film layer 20 is concave and convex corresponding to the surface texture and is tightly attached to the plurality of yarns 13. Therefore, when the textile fabric 1 is cut, the cross sections of the plurality of yarns 13 are not easy to becoming unraveled and the textile fabric 1 is easy to be processed.

In this embodiment, the plurality of yarns 13 include elastic yarns made of a plastic or rubber material; the main body 10 is an elastic webbing, and the first film layer 20 is elastically stretchable with the main body 10 so that the textile fabric 1 is elastically stretchable for ease of application. When stretched by the same force, an amount of deformation of the main body 10 is greater than an amount of deformation of the first film layer 20. Therefore, a portion of the main body 10 without the first film layer 20 provides its original stretch elasticity, and a portion of the main body 10 with the first film layer 20 provides greater toughness to restrict the plurality of yarns 13 so as to prevent the first film layer 20 from peeling off the main body 10. In other embodiments, the main body may be an inelastic textile fabric; when stretched by the same force, the amount of deformation of the main body may be less than the amount of deformation of the first film layer.

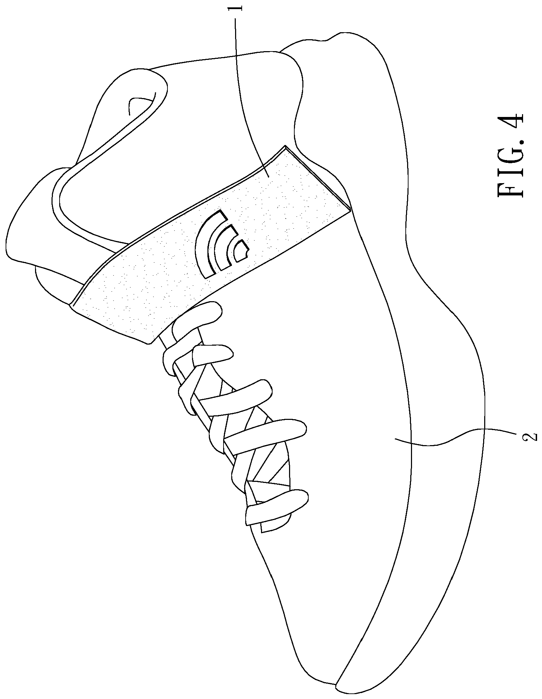

For example, the textile fabric 1 may be used as an elastic band across a vamp of a shoe 2, and the elastic band provides decorative effect and is elastically restricted a collar of the shoe 2 for easy wearing, as shown in figure 4. The at least one hollow hole 12 may show a logo, mark or any design pattern. The textile fabric 1 may be used as a pull-tab of shoes, or applied to other items, such as clothing, bags, etc.

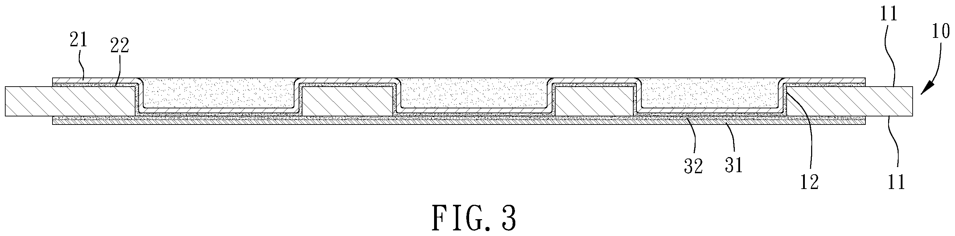

Preferably, the textile fabric 1 further includes a second film layer 30, and the second film layer 30 is disposed on the other of the two surfaces 11 of the main body 10 opposite to the first film layer 20. The first film layer 20 and the second film layer 30 are respectively partially disposed on one of the two surfaces 11 and completely cover the at least one hollow hole 12, and the first film layer 20 is connected with the second film layer 30 via the at least one hollow hole 12, as shown in figure 3. Therefore, the two surfaces 11 of the main body 10 are restricted by the first film layer 20 and the second film layer 30 and are not prone to overstretching, and the first film layer 20 and the second film layer 30 are partially directly connected with each other, which effectively avoids peeling off each other. In addition, the cross sections of the plurality of yarns 13 at the at least one hollow hole 12 are entirely wrapped between the first film layer 20 and the second film layer 30 to avoid deformation and becoming unraveled. Preferably, a depth that the first film layer 20 recessed within the at least one hollow hole 12 is larger than a depth that the second film layer 30 recessed within the at least one hollow hole 12 so that the first film layer 20 can show a three-dimensional surface texture recessed into the at least one hollow hole 12 and provide a special visual effect.

In this embodiment, the first film layer 20 and the second film layer 30 are made of the same material, and a color of the first film layer 20 is different from a color of the second film layer 30. Specifically, the first film layer 20 and the second film layer 30 are made of a material including polyurethane. For example, the first film layer 20 may be transparent and colorless, the second film layer 30 may be black, and the main body 10 may be white. Colors of said layers are matched with one another to create diverse visual effects. A thickness of the first film layer 20 is the same as a thickness of the second film layer 30, and the thickness of the first film layer 20 and the thickness of the second film layer 30 are respectively between 0.05mm and 0.3mm. For example, the thickness of the first film layer 20 and the thickness of the second film layer 30 are respectively 0.1 mm so as to achieve fixing and strengthening effects, and a shape of the at least one hollow hole 12 can be shown clearly. In other embodiments, the first film layer and the second film layer may be made of different materials, and colors of the first film layer and the second film layer may be the same; the thickness of the second film layer may be smaller than the thickness of the first film layer. For example, the thickness of the first film layer may be 0.2 mm, and the thickness of the second film layer may 0.1 mm so that the textile fabric provides good wear-resistant.

Furthermore, the first film layer 20 and the second film layer 30 respectively include a film material layer 21, 31 and a connecting layer 22, 32, and the connecting layer 22, 32 is completely disposed on a side of the film material layer 21, 31 and connected with one of the two surfaces 11. The thickness of the first film layer 20 and the thickness of the second film layer 30 are smaller than a thickness of the main body 10, which facilitates combinations of the first film layer 20 and the second film layer 30 with the main body 10. A material of the connecting layer 22, 32 is different from a material of the film material layer 21, 31. For example, the film material layer 21, 31 may be made of thermoplastic polyurethane, and the connecting layer 22, 32 may be made of a material that has preferable bonding strength with the main body 10 for stable connection. The film material layer 21, 31 is preferably integrated with the connecting layer 22, 32 in advance. For example, the connecting layer 22, 32 may be partially or completely pre-coated, spayed or filmed on a side of the film material layer 21, 31 so that the first film layer 20 and the second film layer 30 are convenient to be used during processing.

During manufacturing, the main body 10 is cut to form the at least one hollow hole 12, and the main body 10 and the first film layer 20 are stacked on a platform with a plurality of suction holes in sequence. Then, air is extracted through the plurality of suction holes and a hot plate is pressed on a side of the first film layer 20 opposite to the main body 10, As a result, the first film layer 20 is soften by heat and attached to the plurality of yarns 13 and recessed within the at least one hollow hole 12. Finally, the second film layer 30 is connected to the other one of the two surfaces 11 of the main body 10 opposite to the first film layer 20 by thermal pressing, which is easy to be manufactured. In other embodiments, the second film layer may be connected with the main body by an adhesive without heating.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A textile fabric (1), including:
a main body (10), including two surfaces (11) opposite to each other and at least one hollow hole (12) penetrating through the two surfaces (11); and
a first film layer (20), disposed on one of the two surfaces (11) and covering the at least one hollow hole (12).

2. The textile fabric (1) of claim 1, wherein the first film layer (20) is recessed within the at least one hollow hole (12) and at least partially connected with an inner surface defining the at least one hollow hole (12).

3. The textile fabric (1) of claim 1, wherein a plurality of yarns (13) of the main body (10) are broken at the at least one hollow hole (12), and cross sections of the plurality of yarns (13) at the at least one hollow hole (12) are connected with and fixed by the first film layer (20).

4. The textile fabric (1) of claim 3, wherein the plurality of yarns (13) include elastic yarns (13) made of a plastic or rubber material.

5. The textile fabric (1) of claim 1, wherein the at least one hollow hole (12) is formed by cutting.

6. The textile fabric (1) of claim 1, wherein the main body (10) is an elastic webbing, and the first film layer (20) is elastically stretchable with the main body (10).

7. The textile fabric (1) of claim 6, wherein when stretched by the same force, an amount of deformation of the main body (10) is greater than an amount of deformation of the first film layer (20).

8. The textile fabric (1) of claim 6, wherein when stretched by the same force, an amount of deformation of the main body (10) is less than an amount of deformation of the first film layer (20).

9. The textile fabric (1) of claim 1, further including a second film layer (30), wherein the second film layer (30) is disposed on the other of the two surfaces (11) of the main body (10) opposite to the first film layer (20).

10. The textile fabric (1) of claim 9, wherein the first film layer (20) is connected with the second film layer (30) via the at least one hollow hole (12).

11. The textile fabric (1) of claim 9, wherein a depth that the first film layer (20) recessed within the at least one hollow hole (12) is larger than a depth that the second film layer (30) recessed within the at least one hollow hole (12).

12. The textile fabric (1) of claim 9, wherein a color of the first film layer (20) is different from a color of the second film layer (30).

13. The textile fabric (1) of claim 9, wherein a thickness of the first film layer (20) and a thickness of the second film layer (30) are respectively between 0.05mm and 0.3mm.

14. The textile fabric (1) of claim 9, wherein a thickness of the first film layer (20) is the same as a thickness of the second film layer (30).

15. The textile fabric (1) of claim 7, wherein the first film layer (20) is recessed within the at least one hollow hole (12) and at least partially connected with an inner surface defining the at least one hollow hole (12); a plurality of yarns (13) of the main body (10) are broken at the at least one hollow hole (12), and cross sections of the plurality of yarns (13) at the at least one hollow hole (12) are connected with and fixed by the first film layer (20); the plurality of yarns (13) include elastic yarns (13) made of a plastic or rubber material; the at least one hollow hole (12) is formed by laser cutting; the textile fabric (1) further includes a second film layer (30), the second film layer (30) is disposed on the other of the two surfaces (11) of the main body (10) opposite to the first film layer (20); the first film layer (20) and the second film layer (30) are respectively partially disposed on one of the two surfaces (11) and completely cover the at least one hollow hole (12); the first film layer (20) is connected with the second film layer (30) via the at least one hollow hole (12); a depth that the first film layer (20) recessed within the at least one hollow hole (12) is larger than a depth that the second film layer (30) recessed within the at least one hollow hole (12); the first film layer (20) and the second film layer (30) are made of the same material; a color of the first film layer (20) is different from a color of the second film layer (30); the first film layer (20) and the second film layer (30) are made of a material including polyurethane; a thickness of the first film layer (20) and a thickness of the second film layer (30) are respectively between 0.05mm and 0.3mm; the thickness of the first film layer (20) is the same as the thickness of the second film layer (30); the first film layer (20) and the second film layer (30) respectively include a film material layer (21, 31) and a connecting layer (22, 32), the connecting layer (22, 32) is completely disposed on a side of the film material layer (21, 31) and connected with one of the two surfaces (11); a material of the connecting layer (22, 32) is different from a material of the film material layer (21, 31); and the thickness of the first film layer (20) and the thickness of the second film layer (30) are smaller than a thickness of the main body (10).
